Europäisches Patentamt

European Patent Office

Office européen des brevets

(19)

(11) **EP 1 580 580 A1**

(12) **EUROPEAN PATENT APPLICATION**
published in accordance with Art. 158(3) EPC

(43) Date of publication:
**28.09.2005 Bulletin 2005/39**

(51) Int Cl.⁷: **G02B 5/126**, E01F 9/06,
G09F 13/16

(21) Application number: **03780937.3**

(22) Date of filing: **19.12.2003**

(86) International application number:
**PCT/JP2003/016361**

(87) International publication number:
**WO 2004/057379 (08.07.2004 Gazette 2004/28)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.12.2002 JP 2002367519
28.04.2003 JP 2002123463**

(71) Applicant: **Tsutsui, Osamu
Chigasaki-shi, Kanagawa 253-0053 (JP)**

(72) Inventor: **Tsutsui, Osamu
Chigasaki-shi, Kanagawa 253-0053 (JP)**

(74) Representative: **Wilson, Gary et al
Marks & Clerk Scotland
19 Royal Exchange Square
Glasgow G1 3AE (GB)**

(54) **RETROREFLECTING FUNCTIONAL MEMBER AND RETROREFLECTING UNIT**

(57)    A retroreflective function member which exhibits better retroreflective properties than a cube corner type retroreflective function member which excels most in the retroreflective properties is provided. A retroreflective function member 1 is formed by injection molding transparent acrylic resin to provide a substantially plate-shape of which the upper surface 2, the bottom surface 3, and right and left surfaces 4 and 5 are flat. The front surface 6 is adapted to serve as the incoming and outgoing surfaces and aluminum is deposited on the rear surface 7 to be used as a reflective surface. The outside of the rear surface 7 is protected by a resin 8.

FIG. 2

EP 1 580 580 A1

**Description**

**FIELD OF INVENTION**

The present invention relates to a retroreflective function member which causes the incoming light to reflect toward a light source, and a retroreflective unit in which the retroreflective function members are laminated. More particularly, the present invention is directed to devices such as delineators of a guardrail on a highway, studs, signs used for marine salvage which are required to be visibly confirmed both at long and short distances.

**BACKGROUND OF THE INVENTION**

There is a micro-glass sphere type retroreflective function member and a cube corner type retroreflective function member in a retroreflective function member.

Known for providing the micro-glass sphere type retroreflective function member are technology whereby glass beads are mixed with road traffic paint with the help of tbc glass beads' (lens) own retroreflective ability, a reflective cloth in which one surface of base cloth is provided with a paint layer containing glass beads semi-embedded in the paint layer, or a reflective sheet in which one surface of a transparent resin plate in which glass beads are embedded is provided with an adhesive layer (refer to Non-Patent Document 1).

Conventional technology is also known in which a lateral surface of the reflective sheet disclosed in the Non-Patent Document 1 is provided with a refractive element and non-slip particles (refer to Patent Document 1).

Another conventional technology is also known in which a glass sphere in which the refractive index is higher the nearer the center, is used to correct the spherical aberrations, thereby heightening the contribution rate to retroreflection (refer to Patent Document 2).

On the other hand, known for providing the cube corner type retroreflective function member is conventional technology in which the surface of a protective film forming a microscopic space is provided with a cube corner type retroreflective element (refer to Patent Document 3).

Further, as an improved version of the cube corner type retroreflecdve function member, conventional technology is known in which incident rays are retroreflected by a triangular pyramidal type reflective surface consisting of three surfaces which intersect at right angles (refer to Patent Document 4).

Still further, another conventional technology is known in which a device is fixed to a guard rail member and adapted to fall down when coming in contact with a vehicle body, thereby expanding the area of the affective retroreflective surface (refer to Patent Document 5).

[Non-Patent Document 1] Pages 1.68 171 of a dictionary of glass (issued on September 24,1985 by Asakura Bookstore);
[Patent Document 1] Japanese Unexamined Patent Publication No. Hei 11-508653 (508653/1999), FIG. 4 and the related figures of the Publication
[Patent Document 2] Japanese Unexamined Patent Publication No. 2000-075115
[Patent Document 3] Description of Japanese Unexamined Patent Publication No. Hei δ-234006 (234006/1996) in [0003] - [0005]
[Patent Document 4] International Application No. WO98-18028
[Patent Document 5] Japanese Unexamined Patent Publication No. 2002-146729

As to each type of reflective performance of the conventional technology, the reflective brightness of the enclosed lens type (bead resin embedded type) reflective sheet is about 100cd/1xm$^2$, the reflective brightness of a capsule lens type reflective sheet is about 300cd/1xm$^2$, and the reflective brightness of the cube corner type (prism lens type) reflective sheet is about 900cd/1xm$^2$. The prism lens type reflective sheet is the best reflective material among the current products.

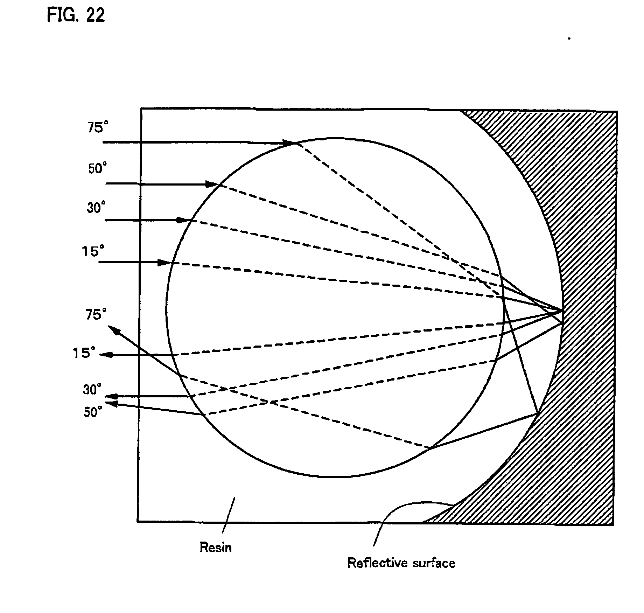

In the conventional technology, to calculate the retroreflective efficiency of the enclosed lens type reflective sheet, a retroreflective state diagram of the enclosed lens type reflective sheet is shown in FIG. 22. In this description, the retroreflective efficiency is defined as the ratio of reflected light rays which are considered to have returned within a shear (displacement) angle of 15° from the incident direction among the incident light rays.

As shown in FIG. 22, since the refractive index of a resin layer is usually about 1.5, it is necessary to have a larger refractive index than that of the resin layer to cause a glass bead to act as the lens. For example, even in the case where the high refraction glass of which the refractive index is 2.2 is used, since 2.2 /1.5 = 1.467, it becomes the same as the glass bead consisting of glass with a low refraction index in the air.

As shown in the Non-Patent Document, a focus position of the glass bead of which the refractive index is 1.5 can conduct the retroreflection most efficiently by bringing the reflective surface to a position where it is 1.38 times as long as the hemisphere (R) of the bead. In this connection, in case of the glass bead of which the refractive index is 1.93, it is most efficient to make the bead surface the reflective surface.

In this manner, the enclosed lens type reflective sheet is provided to bring the reflective surface to a position where it is about 1.38 times as long as the bead's hemisphere (R). However, the focus position varies with the incident height angle of light (an angle relative to the center of the glass bead) as shown in FIG. 22. Namely, the focus position does not change so much when the incident height angle is between 0° and 30°, but the focus position moves forward when the incident height angle is more than 30°. As a result, the outgoing direction of the reflected light deviates greatly from the incident direction of the incident light and no retroreflection is conducted.

When a calculation is made on condition that only light with an incident height angle between 0° and 30° retroreflects as shown in the retroreflective state diagram of FIG. 22,

retroreflectance of the glass bead = cross-sectional area corresponding to the

incident angle of 30° / cross-sectional area of the glass bead

$$= \pi R^2 \times \sin 30^2 / \pi R^2$$

$$= 0.25$$

where the reflective efficiency is about 25 %.

Then, non-uniformity of the glass bead in particle diameter affects the reflective efficiency. In order to obtain adequate retroreflection, it is necessary to adapt a reflective film to a focus position of each bead in the particle diameter. Accordingly, it is desirable that the particle diameter of the bead be constant and the beads which have been well sorted within the limits of 50-100 μm are used. However, it is considered that the reflective efficiency is reduced by about 22 % due to the non-uniformity of the particle diameter compared with using the beads of which the particle diameters are the same and ideal.

Then, an area of the glass bead of the reflective sheet per unit area affects the reflective efficiency. Assuming that the focal distance is 1.38R and the glass beads are filled by an ideal molding, the area ratio of the glass bead of the reflective sheet per unit area is $\pi R^2/(2 \times 1\text{-}38R)^2 = 0.4$. It is therefore considered that the reflective efficiency is further reduced by about 40%,

The above results are Summarized as follows: 0.25 x 0.22 x 0.4 = 0.022 It is to be noted that an extremely low reflective efficiency of about 2.2 % is obtained.

If the reflective efficiency of the enclosed lens type reflective sheet is about 2.2 %, it is considered that the reflective efficiency of the capsule lens type reflective sheet is about 6.6 % and that of the prism lens type reflective sheet is about 20 %, judging from the value of the retroreflective brightness.

The cube corner type reflective sheet has an excellent retroreflective efficiency in that the incident angle for retroreflection is extremely limited, but in a specific range, 20 % of the incident light retroreflects within the scope of ±1.5°.

However, assuming that the cube corner type reflective sheet is used as a visual guide sign (a delineator) for a guard rail in a highway, all of the retroreflective light of ±1.5° does not enter the eyes of a driver, but only a part thereof.

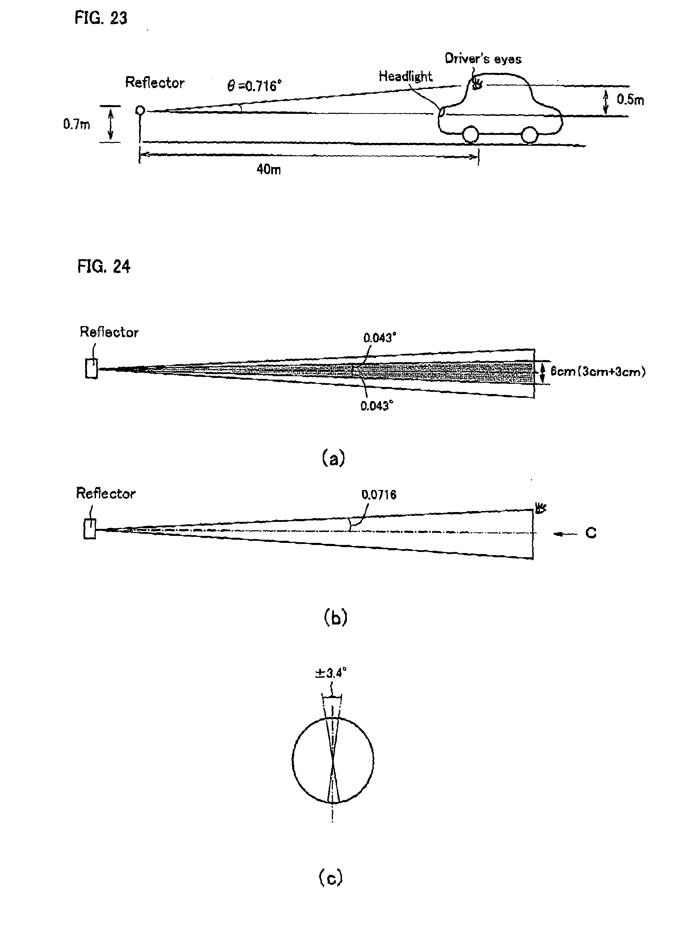

FIG. 23 is a view showing the spread of light reflecting from a retroreflector toward a vehicle and FIG. 24 is a view explaining to what extent the retroreflective light enters the driver's eyes, wherein (a) is a plan view, (b) is a side view, and (c) is a view as seen from the arrow direction C of (b), respectively. In these figures, the distance from the driver's eyes to the retroreflector is 40 m, the vertical distance from the headlight to the position of the driver's eyes is 50 cm, and the distance between the driver's eyes is 6 cm (3 cm + 3 cm), wherein a description is given on condition that the position of the driver's eyes, the head light, and the retroreflector are provided on the same vertical surface.

The angle (an observation angle) between the driver's eyes and the reflector is 0.716°. Then, the relationship between toric rays of light in the direction of the observation angle of 0.716° and the driver's eyes is such that 6cm of both eyes' width exists at the upper portion of the toric ring of 0.716° as shown in FIGS. 24 (a) and (b). With this, the angle of light directed from the reflector toward the driver's eyes is found in accordance with the formula:

$$6 / (2 \times 3.14 \times 50) \times 360° = 6.8° = \pm 3.4°$$

This is shown in FIG. 24 (c) as the region of the circular reflector. The upper triangle of the upper and lower triangles becomes a section where the light directed toward the driver's eyes is reflected.

Of course, the light rays with the observation angle of 0.716° among the light rays with the observation angles of 0° -15° reflected from this section finally become the effective light which enter the eyes of the driver who is 40 m away from the reflector. The area ratio of the triangle relative to a gross area of the circular reflector in this case can be found as follows:

$$6.8° \, / \, 360° = 0.0189$$

where the area ratio is only 1.89 %.

In this manner, the extent of the ratio of the light rays reflected in the direction of the position of the driver's eyes among the retroreflected light rays is very important. Namely, it is considered that the retroreflective properties are proportional to the value obtained by multiplying the retroreflective efficiency by the ratio of light reflected in the direction of the driver's eyes. Although the distance between the driver's eyes and the reflector is set 40 m in FIG. 24, the same value can be obtained even though the distance is changed to 120 m. In such a sense, there is considerable room for improvement in the retroreflective properties of even the cube corner type reflective sheet which has the most excellent retroreflective properties in the present circumstances.

On the one hand, a reflective material provided with more excellent retrortilective properties is required. Specifically, a delincator of which the diameter is 70 mm or more is generally used above a guardrail as a visual guide sign for a guardrail on a highway. However, to improve the visibility and landscape of the guardrail during night driving, it is necessary to install the visual guide sign (delineator) on a depressed portion at the center of the guardrail.

To meet such requirements, various companies are trying to develop a thin visual guide sign (delineator) in which the cube corner type reflective member is incorporated. However, as far as performance is concerned, their prototype models are still in such a state that the driver "cannot see at all" the delineator 400 m ahead or he "can manage to see" it 100 m - 300 m ahead. In this manner, to be adopted on the highway, it is required for the delineator to be upgraded so that it has a performance of more than 10 times regarding the reflective properties at a long distance.

The ultimate cause of deficiency in performance at a long distance is that the reflective section is extremely small in area. The area of the reflective section of the cube corner type delineator which is now used above the guardrail can be defined as follows: $\pi / 4 \times 10 \times 10 = 78.5$ cm$^2$ where the diameter is 100 mm. On the contrary, in the case where the visual guide sign (delineator) is installed at the depressed portion of the guardrail, about 20 mm is only allowed for the thickness of the visual guide sign so that it does not project toward the road side and about 100 mm for the width. In this manner, an allowable area of the reflective section can be defined as follows:

$1.2 \times 9.0 = 14.8$ cm$^2$ Accordingly, the area becomes about 1/7 of a $\phi$100 type delineator. As a result, the retroreflective brightness becomes insufficient and only such a structure as shown in the Patent Document 5 can be made available.

## SUMMARY OF THE INVENTION

It is therefore an object of the present invention to provide an excellent retroreflective member at a low price which can be installed in a narrow space such as that for a guardrail on a highway and which has a performance gain ratio of more than 10 times, at a long distance (e.g., 300 - 400 m), as high as a cube corner type reflective sheet which has the highest retroreflective performance of conventional products.

To attain the above-mentioned object, according to the present invention, a retroreflective function member comprising a flat plate-shaped transparent body made of acrylic resin and the like is provided, in which the front surface is an incident and outgoing surface, the rear surface is a reflective surface provided with aluminum deposition and the like, the upper and lower surfaces are flat surfaces, and at least one surface of both side surfaces is a flat reflective surface, wherein the front surface projects forward to have a cylindrical shape (i.e., the shape in which a column is axially cut) when seen from the side and at least one surface of the rear surface and both side surfaces is a bow shape or an inverse bow shape.

With this structure, it is possible to obtain a retroreflective function member which has retroreflective properties more than 10 times as high as the conventional products at a long distance (300 - 400 m).

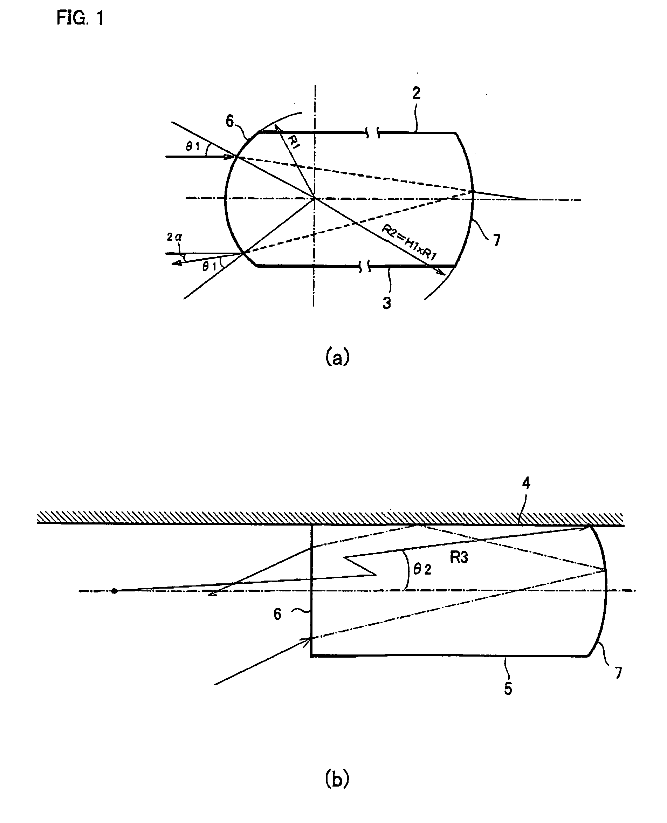

A working principle of the retroreflective function member with the above structure will now be described. First, as shown in FIG. 1 (a) which is a side view of which the intermediate part is omitted, the vertical retroreflection is conducted in such a manner that light incident on the front surface 6 of a lens body goes straight through the lens body after refraction, reflects on a reflective surface of the rear surface 7 of the lens body, and is emitted from the front surface 6 of the lens body as reflected light. In this case, if the reflective surface is situated near a focal position of the incident light, for example, when the curvature radius of the front surface 6 is R1 viewed from the side, a curvature radius of the rear surface 7 is R2 viewed from the side, and R2 / R1 ≒ 2.0, all the reflected light ratroreflecting in the incident direction. By changing the value of R2 / R1, the flux of retroreflected light in the vertical direction is narrowed or widened. Further, the refractive index of a medium (i.e., a transparent body) on which the light is incident varies with the wavelength of the incident light (A normal refraction index has an intermediate value). Incident angles of the light with blue components and the light with red components to the medium differ depending on the difference in the refractive index even though this is the light incident at the same incident height, and the reflected light on the rear surface also changes. Taking this into consideration, a reducing angle of the light flux in the vertical direction has been calculated using the acrylic resin (n = 1.49) (refer to Table 1).

Now, the relationship between the radius R1 of curvature of the front surface 6 and the radius R2 of curvature of the rear surface 7 is $1.5 \leq R2 / R1 \leq 2.5$, preferably $1.7 \leq R2 /, R1 \leq 2.0$. If R2 / R1 (H1) is below 1.5, the extent (spread) of light flux of the reflected Light in the vertical direction becomes too large. If R2 / R1 is approximately 2.0, the light flux of the reflected light in the vertical direction is reduced to the fullest extent. On the contrary, if R2 / R1 is above 2.5, the extent of the light flux of the reflected light in the vertical direction becomes too large.

When taking this into consideration, as shown in Table 1, to make the reducing angle in the vertical direction 1.5° which is suitable for a short distance (25 - 50 m), H1 =1.71. To make the reducing angle in the vertical direction 0.3° which is suitable for a long distance (300 - 400 m), H1 = 1.95. Particularly, when taking very short distances and very long distances into consideration, $1.5 \leq H1 \leq 2.5$.

## Table 1: Design study data for a vertical reducing angle

| θ1 | 1.71 n=1.508 | 1.71 n=1.486 | 1.88 n=1.508 | 1.88 n=1.488 | 1.91 n=1.508 | 1.91 n=1.486 | 1.93 n=1.509 | 1.93 n=1.486 | 1.95 n=1.508 | 1.95 n=1.486 | 1.99 n=1.508 | 1.99 n=1.486 |
|---|---|---|---|---|---|---|---|---|---|---|---|---|
| 0° | 0 | 0 | 0 | 0 | 0 | 0 | 0 | 0 | 0 | 0 | 0 | 0 |
| 1° | 0.1017794 | 0.1328969 | 0.0318463 | 0.0617275 | 0.0205681 | 0.0504633 | 0.0133728 | 0.0431814 | 0.006326 | 0.0360293 | -0.0073456 | 0.0221563 |
| 2° | 0.2031316 | 0.2653888 | 0.062682 | 0.1230405 | 0.0407238 | 0.1005543 | 0.0263345 | 0.0859519 | 0.0122400 | 0.071649 | -0.0160981 | 0.0439058 |
| 3° | 0.3036293 | 0.3969827 | 0.09328863 | 0.1835244 | 0.0600545 | 0.1498004 | 0.038674 | 0.1279003 | 0.0173362 | 0.1064495 | -0.0236645 | 0.0648416 |
| 4° | 0.4028448 | 0.5273165 | 0.1224462 | 0.2427639 | 0.0781471 | 0.1978085 | 0.0493798 | 0.1688149 | 0.0212024 | 0.1400203 | -0.0334523 | 0.0845559 |
| 5° | 0.5003495 | 0.6559406 | 0.1498458 | 0.3003431 | 0.0945879 | 0.2441848 | 0.0586392 | 0.2078834 | 0.0234282 | 0.1719507 | -0.0448696 | 0.1028408 |
| 6° | 0.595714 | 0.7824236 | 0.1763684 | 0.3558452 | 0.1088625 | 0.2884549 | 0.0658395 | 0.2445926 | 0.0236017 | 0.2016287 | -0.0583263 | 0.1186872 |
| 7° | 0.6885079 | 0.9063372 | 0.1982362 | 0.4088529 | 0.1208552 | 0.3302832 | 0.0705665 | 0.2792287 | 0.0213103 | 0.2292419 | -0.0742294 | 0.1322853 |
| 8° | 0.7782892 | 1.0272485 | 0.2183104 | 0.4589465 | 0.1298493 | 0.3691725 | 0.0724048 | 0.3108766 | 0.0161406 | 0.2537759 | -0.092893 | 0.1430236 |
| 9° | 0.8645545 | 1.1447242 | 0.2349903 | 0.5057059 | 0.1355284 | 0.4047649 | 0.0709375 | 0.3392189 | 0.0078154 | 0.2750155 | -0.1150287 | 0.1504496 |
| 10° | 0.9471386 | 1.2683287 | 0.247914 | 0.5487083 | 0.1374688 | 0.4366196 | 0.0657462 | 0.3638134 | -0.0046005 | 0.2925429 | -0.1407607 | 0.1542685 |
| 11° | 1.0253144 | 1.3676244 | 0.2566575 | 0.5875293 | 0.1362466 | 0.4640147 | 0.0564108 | 0.3843945 | -0.0208064 | 0.3059391 | -0.1705748 | 0.153944 |
| 12° | 1.0987419 | 1.4721716 | 0.2607840 | 0.6217427 | 0.1284477 | 0.487426 | 0.0425083 | 0.4002076 | -0.0416637 | 0.3147829 | -0.2049197 | 0.1490978 |
| 13° | 1.1689796 | 1.5715277 | 0.2598963 | 0.6509193 | 0.1186381 | 0.5055257 | 0.0238145 | 0.4111173 | -0.0674953 | 0.3186504 | | |
| 14° | 1.2295825 | 1.6652477 | 0.2535324 | 0.6746277 | 0.0983913 | 0.5181877 | -0.0006979 | 0.416608 | -0.0987289 | 0.3171155 | | |
| 15° | 1.2861033 | 1.7528828 | 0.2412269 | 0.6924331 | 0.0762756 | 0.5249764 | -0.03085 | 0.4162428 | -0.1357869 | 0.3097487 | | |
| 16° | 1.336091 | 1.8039817 | 0.2226892 | 0.7098983 | 0.0488568 | 0.525468 | -0.061301 | 0.4095943 | -0.1791087 | 0.2961182 | | |
| 17° | 1.3790817 | 1.8080894 | 0.1972934 | 0.7085825 | 0.0106978 | 0.5191842 | -0.1104603 | 0.3962237 | -0.2291204 | 0.2757886 | | |
| 18° | 1.4146476 | 1.9747469 | 0.1646984 | 0.7080412 | -0.0328431 | 0.5057428 | -0.160778 | 0.3756905 | -0.2862658 | 0.2483216 | | |
| 19° | 1.4422875 | 2.0334591 | 0.1244375 | 0.6958263 | -0.0836609 | 0.4846592 | -0.2188905 | 0.3475507 | -0.3509837 | 0.2132738 | | |
| 20° | 1.4615757 | 2.083858 | 0.0700604 | 0.8774863 | -0.1428485 | 0.4554912 | -0.2846503 | 0.3113587 | -0.4237191 | 0.1701998 | | |
| 21° | 1.5280944 | 2.1253696 | 0.0191124 | 0.8505649 | -0.2102135 | 0.4177884 | -0.3581058 | 0.2668566 | -0.5049207 | 0.1186493 | | |
| 22° | 1.4731344 | 2.1575558 | -0.0466846 | 0.8146015 | -0.2867697 | 0.3710814 | -0.4425111 | 0.2129839 | -0.595041 | 0.0581674 | | |
| 23° | 1.4644622 | 2.1709338 | -0.122334 | 0.5691313 | -0.3727476 | 0.314838 | -0.5353249 | 0.1499091 | | | | |
| 24° | 1.4455123 | 2.1920178 | -0.2077631 | 0.5136844 | -0.4686424 | 0.2488612 | -0.6360107 | 0.0769337 | | | | |
| 25° | 1.4157965 | 2.1933164 | -0.3036239 | 0.447786 | -0.574913 | 0.1723887 | | | | | | |
| 26° | 1.3748209 | 2.183333 | -0.4103838 | 0.3709563 | -0.6920343 | 0.0850433 | | | | | | |
| 27° | 1.3220863 | 2.1615654 | -0.528555 | 0.28271 | | | | | | | | |
| 28° | 1.257088 | 2.1275051 | -0.6585946 | 0.1825552 | | | | | | | | |
| 29° | | | | | | | | | | | | |
| 30° | | | | | | | | | | | | |

As shown in FIG. 1(b), the retroreflection in the horizontal direction is provided in such a manner that the light incident on the front surface 6 of the lens body goes straight through the lens body after refraction, reflects on the reflected surface of the rear surface 7 of the lens body, then reflects on the side surface 4, and is emitted from the front surface 6 of the lens body as reflected light. In this case, if the dimension of R3 is large, the angle between the rear surface 7 and the side surface 4 of the lens body becomes substantially 90°, thus all the reflected light retroreflects in the incident direction. By changing the value of R3, the light flux of the retroreflective light in the horizontal, direction is reduced or widened.

By causing the center of the radius of curvature of the front surface when viewed from the side to coincide with or to be situated at the rear of, the center of the radius of curvature of the rear surface on the center line when viewed from the side, it is possible to widen the angle of the incident light in the front surface which can retroreflect.

Further, it is desirable that the center of the curvature radius R3 of the rear surface when viewed from the top be situated between the central axis of the incident light and an extension of the reflective side surface. With this structure, there is a point that retroreflects 100% on the reflected surface of the rear surface.

It is also desirable that the thickness of the retroreflective function member when viewed from the side be provided in such a manner that an angle ($\theta$1) between the incident light from the horizontal direction and the line passing through the center of curvature radius of the front surface is within 30°. When the thickness of the retroreflective function member is larger than the above, the extent of the light flux of the reflected light in the vertical direction becomes large to increase the dead wood.

As shown in FIG 1 (b), an angle ($\theta$2) between a line connecting the end section of the rear surface of the retroreflective function member in the width direction viewed from the top with the center of the radius of curvature of the rear surface and an axis line passing through the center of the radius of curvature of the rear surface is $0.01° \leq \theta2 \leq 1.0°$, preferably $0.02° \leq \theta2 \leq 0.5°$. When the value of $\theta$2 is smaller than 0.01°, the light flux in the horizontal direction is reduced too much and as a result, the reflected light does not return to the driver's view unless it is a very long distance of 400 m or more. On the contrary, if the value of $\theta$2 is larger than 1.0°, the light flux in the horizontal direction is widened too much to increase the deadwood. To make the reducing angle in the horizontal direction 1.5° which is suitable for a short distance (20 - 50 m), $\theta2 = 1.5° \times 1/3 = 0.5°$. To make the reducing angle in the hotizontal direction 0.06° which is suitable for a long distance (300 - 400 m), $\theta2 = 0.06° \times 1/3 = 0.02°$. In particular, when taking the reducing angle for very short distance and very long distance into consideration, $0.01° \leq \theta2 \leq 1.0°$.

Further, a rotrareflective unit according to the present invention comprises a lens unit formed by laminating a plurality of retroreflective function members in the vertical direction with the front surface and the side surface aligned. In case of the lamination layer, the front surface becomes lenticular (a series of shapes formed by axially cutting a column).

By selecting laminated retroreflective function members having different retroreflective properties, for example, by increasing the number of lens bodies used for a long distance, it is possible to drastically improve the visibility at a long distance of 300 - 400 m in night driving.

Even though the distance between the retroreflective reaction member and a vehicle changes in accordance with the running of the vehicle, the efficiency of the unit itself improves because optimum conditions can be attained for any of the retroreflective function members.

**BRIEF DESCRIPTION OF THE DRAWINGS**

The above and other objects, features and advantages of the present invention will become more apparent from the following description when taken in conjunction with the accompanying drawings.

FIG 1 (a) is a plan view explaining the retroreflective condition of a retroreflective unit according to the present invention and FIG. 1 (b) is a side view explaining the retroreflective condition of the retroreflective unit;
FIG. 2 is a perspective view of a retroreflective function member according to the present invention;
FIG. 3 (a) is a side view of the retroreflective function member according to the present invention, FIG 3 (b) is a plan view of the retroreflective function member according to the present invention, and FIG. 3 (c) is a plan view of another embodiment;
FIGS. 4 is a perspective view of the retroreflective unit in which the retroreflective function members according to the present invention are laminated;
FIG. 5 (a) is a plan view of a lens body according to another embodiment. FIG 5 (b) is a view as seen from the arrow direction b of (a), and FIG. 5 (c) is a view, similar to (b), showing another embodiment;
FIGS. 6 (a) - (c) are plan views of the retroreflective unit in which the lens bodies are incorporated;
FIG. 7 is a view, similar to FIG 5, showing another embodiment;
FIG. 8 is a substantially plan view of a metal mold for injection molding the lens body according to another embodiment as shown in FIG. 5;
FIG. 9 is a side view showing another embodiment of the retroreflective unit;

FIG 10 is a substantially plan view of a metal mold for injection molding the lens body according to another embodiment as shown in FIG. 9;

FIG. 11 is a plan view of a road where the retroreflective unit according to the present invention is applied as a stud;

FIG. 12 is a plan view showing the inner structure of the stud which is one embodiment of the retroreflective unit according to the present invention;

FIG. 13 is a longitudinal sectional view of the stud as shown in FIG. 12;

FIG. 14 is a plan view showing the inner structure of the stud according to another embodiment;

FIG 15 is a longitudinal sectional view of the stud as shown in FIG 14;

FIG 16 is a plan view showing the inner structure of the stud according to another embodiment;

FIG. 17 is a plan view showing the inner structure of the stud according to another embodiment;

FIG 18 is a longitudinal sectional view of the stud according to another embodiment;

FIG 19 is a plan view showing the inner structure of the stud according to another embodiment;

FIG. 20 is a front view of the stud as shown in FIG. 19;

FIG. 21 is a side view of the stud as shown in FIG. 19;

FIG. 22 is a view explaining a conventional micro-glass sphere type retrorefective function member,

FIG. 23 is a view explaining an observation angle due to displacement between a headlight of a vehicle and a driver, and

FIG. 24 (a) is a plan view showing the relationship between a spread of the reflected light from a retroreflector and rays of light incident on a driver's eyes, FIG. 24 (b) is a side view of the relationship as shown in (a), and FIG. 24 (c) is a view vertically cutting the spread of the reflected light from the retroreflector at the driver's position.

## DESCRIPTION OF THE PREFERRED EMBODIMENTS

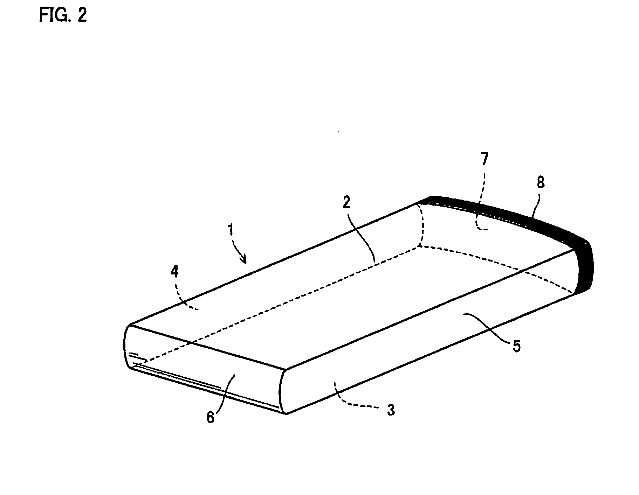

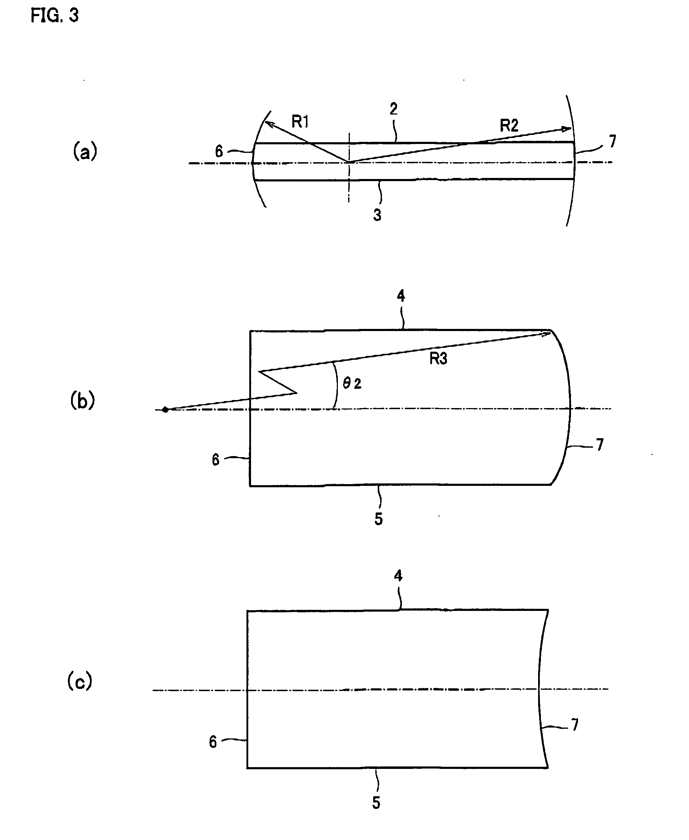

Preferred embodiments of the present invention will now be described with reference to the accompanying drawings. FIG. 2 is a perspective view of a retroreflective function member according to the present invention. FIG. 3 (a) is a side view of the retroreflective function member according to the present invention, FIG. 3 (b) is a plan view of the retroreflective function member according to the present invention, and FIG 3 (c) is a plan view of another embodiment.

A retroreflective function member 1 is formed by injection molding the transparent acrylic resin and is substantially plate-shaped, in which the upper surface 2, the lower surface 3, and right and left side surfaces 4 and 5 are formed flat. The front surface 6 is the incident (incoming) and outgoing surface, the rear surface 7 is aluminum-deposited to serve as a reflected surface, and the outside of the rear surface 7 is protected by a resin 8.

The side of the retroreflective function member 1 is not particularly limited, but the width is about 10 - 20 mm, the thickness is about 2.5 - 6 mm, and the length is about 15 - 30 mm.

The front surface 6 projects forward to have a cylindrical shape when viewed from the side and the rear surface 7 projects backwards to have a convex aspheric surface (i.e., a bow shape) viewed from the top. As shown in FIG. 3 (a), when the curvature radius of the front surface 6 when viewed from the side is R1 and the curvature radius of the rear surface 7 when viewed from the side is R2, R2 / R1 = H1 it is designed so that $1.7 \leq H1 \leq 2.0$. The reason for this is to limit the extent of the light flux of the reflected light in the vertical direction to a certain degree. Specifically, in the case where the retroreflective function member 1 is used as a visual guide sign on a highway, it is intended to allow the reflected light from the retroreflective function member 1 to be viewed by a driver at a distance of 25 - 400 m in just proportion.

As shown in FIG. 3 (b), the retroreflective function member is designed in such a manner that an angle between a line connecting an end section of the rear surface 7 in the width direction with the center of a curvature radius R3 of the rear surface when viewed from the top and an axis line passing through the center of the curvature radius R3 of the rear surface is $0.02° \leq \theta2 \leq 0.5°$. As mentioned above, the reason for this is to limit the extent of light flux of the reflected light in the horizontal direction to a certain degree. Specifically, in the case where the retroreflective function member 1 is used as the visual guide sign on a highway, it is intended to allow the reflected light from the retroreflective function member 1 to be viewed by the driver at a distance of 25 - 400 m in just proportion.

In this connection, when the retroreflective function member 1 is designed in such a manner that 82 is 0.1°, the reflecting light is reduced to within $\pm 0.3°$ in the horizontal direction around the light axis.

The rear surface 7 projects backwards to have a bow shape when viewed from the top, but as shown in FIG. 3 (c), it may have an inverse bow shape which concaves forward. Even in this case, the rear surface 7 has a shape which projects backwards when viewed from the side.

Further, it is desirable that the thickness of the retroreflective function member when viewed from the side be provided in such a manner that the angle (θ1: refer to FIG. 1) between the incident light from the horizontal direction and the line passing through the center of the curvature radius of the front surface is within 30°. As described above, when the retroreflective function member is thicker than this, the extent of light flux of the reflected light in the vertical direction becomes large to increase the deadwood.

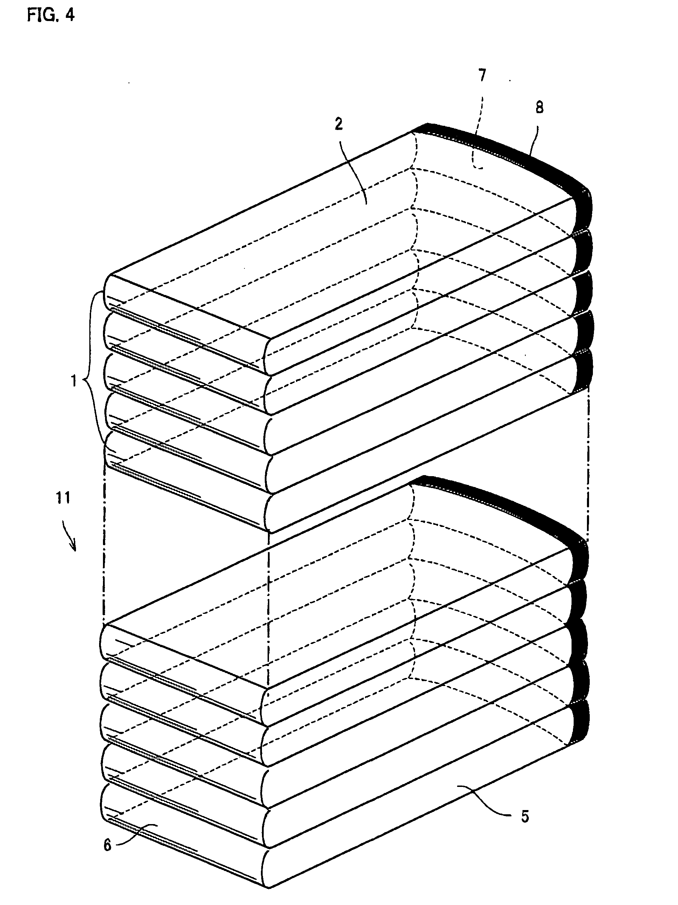

FIG. 4 is a perspective view showing another embodiment. In this embodiment, a plurality of retroreflective function members 1 is laminated in the vertical direction with the front and side surfaces aligned to have a lens unit 11. Each retroreflective function member 1 forming the lens unit 11 may be the same, but retroreflective function members with different characteristics may also be laminated. Further, the lens unit 11 of the shape formed by laminating retroreflective function members 1 may be integrally formed.

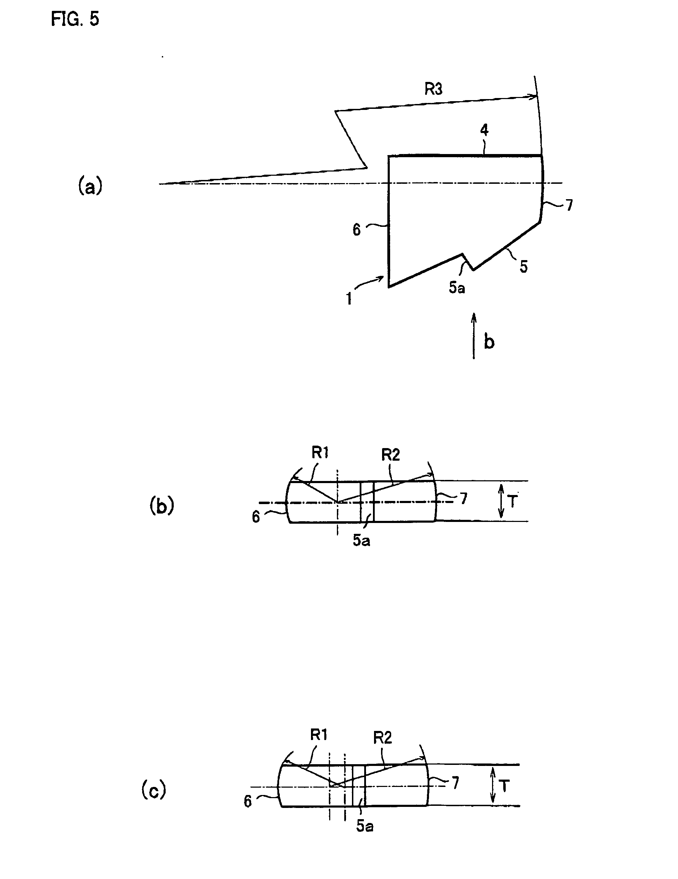

FIG. 5 (a) is a plan view of a lens body according to another embodiment, FIG. 5 (b) is a view as seen from the arrow direction b of (a), and FIG 5 (c) is a view similar to (b) showing another embodiment. In this embodiment, a shape of the front surface 6 is made linear when viewed from the top and projects forward to have a cylindrical shape when viewed from the side. The rear surface 7 is about half the width (15 mm) of the front surface 6 when viewed from the top and projects backwards to have a convex aspheric surface shape viewed from the top and side. In this manner, even by making the width of the rear surface 7 half the width of the front surface 6, it is possible to retroreflect all the incident light from the front surface 6. It is therefore useless to have extra width and convenient to make the visual guide sign (delineator) slim.

Referring to the side surfaces 4 and 5, the side surface 4 contributing to retroreflection is made flat, but the side surface 5 is provided partly with a notch 5a for easy positioning in the case where the lens body is incorporated in the casing as a unit or for easily locking other members.

Further, in the embodiment as shown in (b), the center of the curvature radius (R1) of the front surface coincides, on the center line, with the center of the curvature radius (R2) of the rear surface 7 when viewed from the side. However, as shown in (c), by locating the center of the curvature radius (R1) of the front surface 6 at the rear of the center of the curvature radius (R2) of the rear surface 7, namely by overlapping them on the center line when viewed from the side, it is possible to widen the retroreflectable incident angle in the vertical direction.

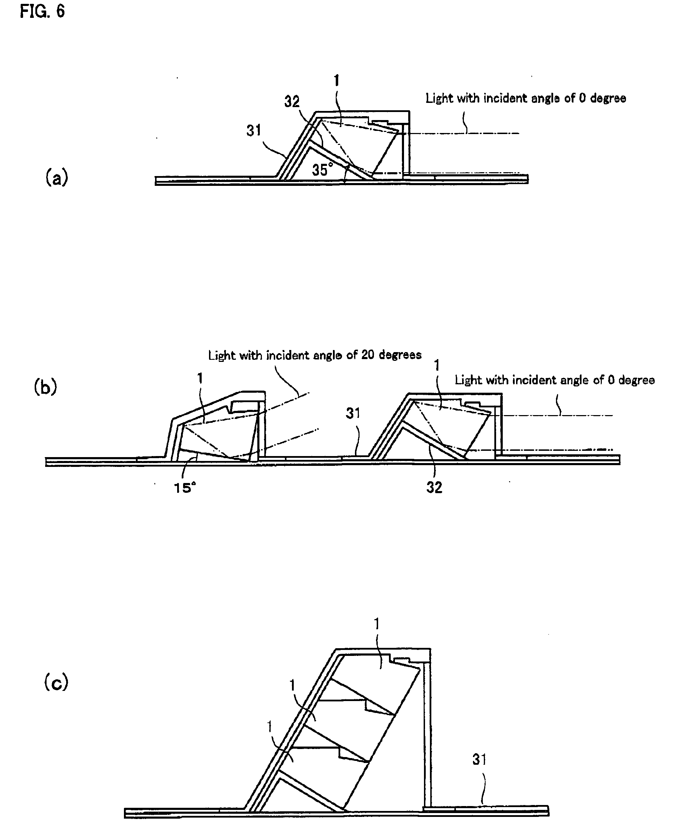

FIGS. 6 (a) - (c) show a plan view of a retroreflective unit in which the lens body of the above shape is incorporated. The lens body as shown in FIG. 5 is designed to most efficiently retroreflect the incident light at an angle of 35° relative to a perpendicular line of the front surface 6. The most efficient angle is determined by the refractive index of the lens body and the ratio of the width and the length thereof.

In the retroreflective unit as shown in FIG. 6 (a), the lens body 1 is installed at a slope of 35° relative to a casing 31 and designed to most efficiently reflect the incident light of 0° based on the longitudinal direction of the casing 31.

Only one lens body 1 is shown in FIG. 6 (a), but a plurality of lens bodies 1 may be laminated in the vertical direction of the paper to provide a lens unit. Although a supporting plate 32 is pushed against the side surface 4 of the lens body 1 in the figure, the supporting plate 32 may be omitted.

In the retroreflective unit as shown in FIG. 6 (b), the lens bodies 1, 1 (or lens units) are separately mounted in the longitudinal direction on the casing 31. Since the front lens body 1 is mounted at a slope of 35° relative to the casing 31, it reflects the incident light of 0° most efficiently, but the rear lens body 1 is mounted at a slope of 15° relative to the casing 31. As a result, the rear lens body 1 reflects the incident light of 20° most efficiently. Such a retroreflective unit is suitably applied to a corner section of a road.

In the retroreflective unit as shown in FIG. 6 (c), a plurality of lens bodies 1 (or lens units) is laterally laminated and held within the casing 31. By laminating the lens bodies in such a way, the absolute amount of retroreflective light increases. In the figure, the installation angle of the lens bodies 1 relative to the casing 31 is set at 35°, but each lens body may be installed at a different angle. It is also possible to laminate the lens body in the vertical direction to the paper.

Specific design examples are shown in Table 2, in which eight types of lens bodies of A - C" types of which the reducing angles in the vertical direction are 0.3°, 0.6°, 1.5° and the reducing angles in the horizontal direction are 0.065°, 0.129°, 0.258°, 0.6°, and 2.5° were made, and the values of R1, R2, R3, and T are shown in Table 3.

[Table 2]

| Reduction in the horizontal direction / Reduction in the vertical direction | 1.5° | 0.6° | 0.258° | 0.129° | 0.065° |
|---|---|---|---|---|---|
| 1.5° | A type | | | | A' type |
| 0.6° | | B type | B' type | | B" type |
| 0.3° | | | C type | C' type | C" type |

[Table 3]

| | R3=430 | R3=1074 | R3=2500 | R3=5001 | R3=9932 |
|---|---|---|---|---|---|
| R1=6.64 R2=11.36 T=5.40 | A type | | | | A' type |
| R1=6.19 R2=11.81 T=5.43 | | B type | B' type | | B" type |
| R1=6.10 R2=11.90 T=4.57 | | | C type | C' type | C" type |

As one example of the visual guide sign (delineator) in which the above lens bodies are combined, comparative calculations were made for the conventional products regarding the performance (i.e., corneal lighting intensity) using A type (3 pieces), A' type (1 piece), B type (2 pieces), B" type (2 pieces), C type (8 pieces), and C"(2 pieces). As shown in Table 4, a slim, high-performance visual guide sign (delineator) having a performance gain ratio of 10.1 times at a distance of 100 m, 13.5 times at a distance of 200 m, 21.2 times at a distance of 300 m, 19.6 times at a distance of 400m as high as conventional products is available.

[Table 4]

| | Performance (Corneal lighting intensity) | | Performance gain (a) / (b) |
|---|---|---|---|
| | Our developed product (a) | Conventional product (b) | |
| 25 m | $2.82 \times 10^{-3}$ | $1.65 \times 10^{-3}$ | 1.71 times |
| 50 m | $9.21 \times 10^{-4}$ | $4.77 \times 10^{-4}$ | 1.93 times |
| 100 m | $7.06 \times 10^{-4}$ | $7.02 \times 10^{-5}$ | 10.05 times |
| 200 m | $9.96 \times 10^{-5}$ | $7.38 \times 10^{-6}$ | 13.50 times |
| 300 m | $3.87 \times 10^{-5}$ | $1.82 \times 10^{-6}$ | 21.24 times |
| 400 m | $1.29 \times 10^{-5}$ | $6.57 \times 10^{-7}$ | 19.59 times |

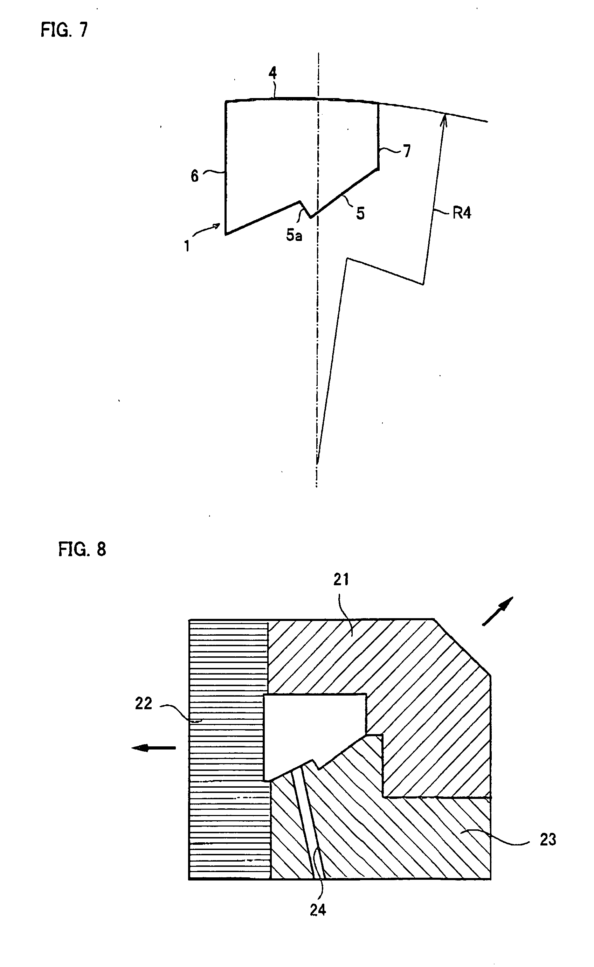

FIG. 7 is a view similar to FIG. 5 showing another embodiment. In this embodiment, the shape of the side surface 4 and the rear surface 7 differs from that of the previous embodiment.

The rear surface 7 projects backwards to have a cylindrical shape when viewed from the side, but it is linear when viewed from the top. Instead, the side surface 4 laterally projects to have a curved surface (R4 = 2500 - 24000 mm).

FIG. 8 is a substantially plan view of a metal mold for injection molding the lens body according to another embodiment as shown in FIG 5. The injection molding equipment comprises movable metal molds 21 and 22, a fixed metal mold 23, and upper and lower metal molds (not shown). By closing these metal molds, a cavity for molding is prepared in which molten resin is injected.

In this molding equipment, by bringing the parting line of the metal mold to an intersection point between the front surface 6 and the side surface 4 of the lens body 1, an intersection point between the front surface 6 and the side surface 5, and an intersection point between the rear surface 7 and the side surface 5, the parting line is removed from the side surface 4 and the rear surface, and the intersection point between the side surface 4 and the rear surface 7 which most affects the retroreflective function. In particular, when the parting line comes to the intersection point between the side surface 4 and the rear surface 7, an angle between the side surface 4 and the rear surface 7 is considered to slightly change each shot. As seen in this embodiment, if the intersection point between the side surface 4 and the rear surface 7 is formed in advance within the metal mold 21, it is possible to obtain a lens body which excels in dimensional accuracy. The fixed metal mold 23 for forming the side surface 5 which does not contribute to the retroreflection is provided with a runner 24.

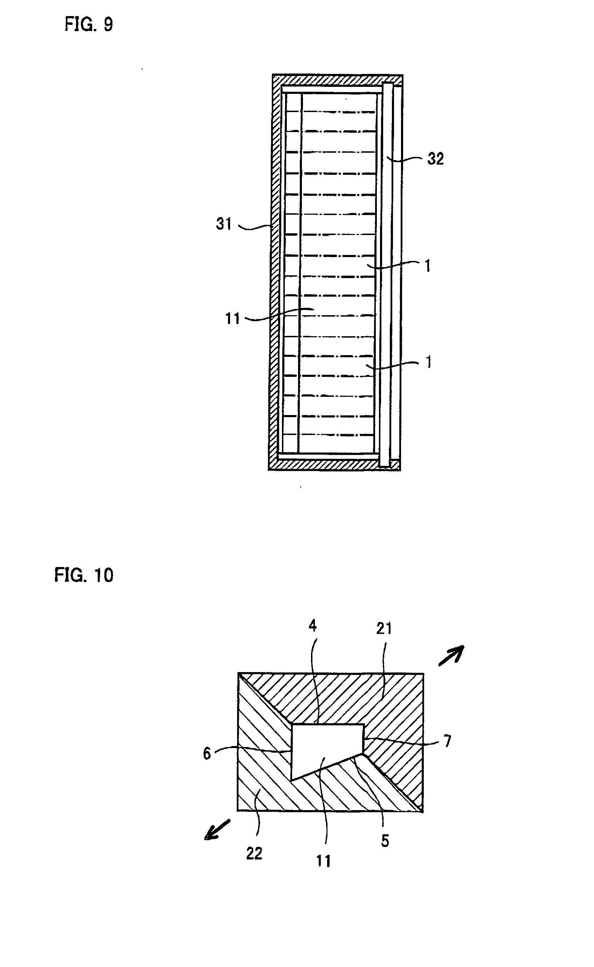

FIG. 9 is a side view showing another embodiment of the retroreflective unit. FIG. 10 is a substantially plan view of the metal mold for injection molding the lens body according to another embodiment as shown in FIG. 9. In this retroreflective unit, a plurality of leas bodies 1 is vertically laminated, integrally formed in a given shape to have the lens unit 11, and housed within the casing 31. A transparent protective plate 32 is provided ahead of the lens unit 11.

Injection molding equipment for molding the lens unit 11 comprises two metal molds 21 and 22. By bringing the parting line of these metal molds to an intersection point between the front surface 6 and the side surface 4 of the lens unit 11 and an intersection point between the rear surface 7 and the side surface 5, the parting line is removed from a location which affects the retroreflective function as described above.

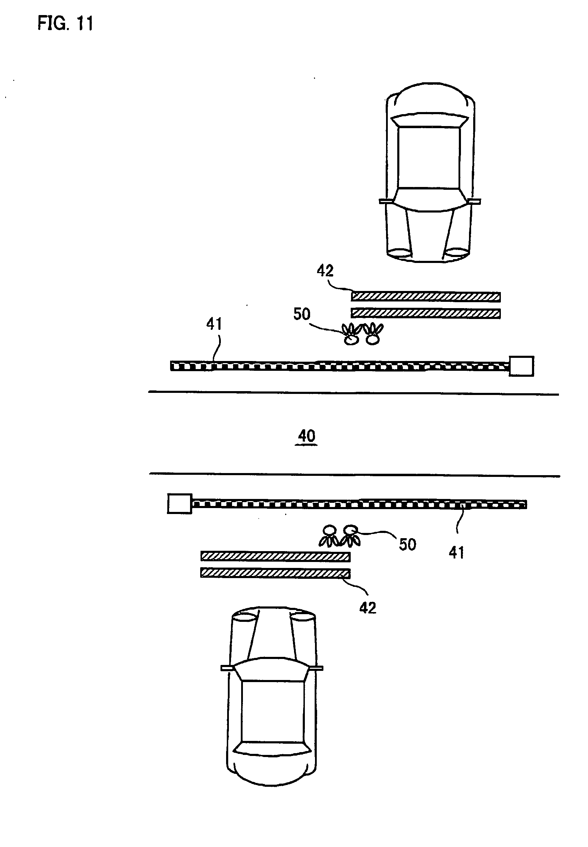

FIG. 11 is a plan view of a road where the retroreflective unit according to the present invention is applied as the studs. The road crosses a railroad crossing and crossing bars 41 are provided in front of the crossing. Studs 50 are provided near limit lines 42 in front of the crossing bars 41 and at sections near the center of the road.

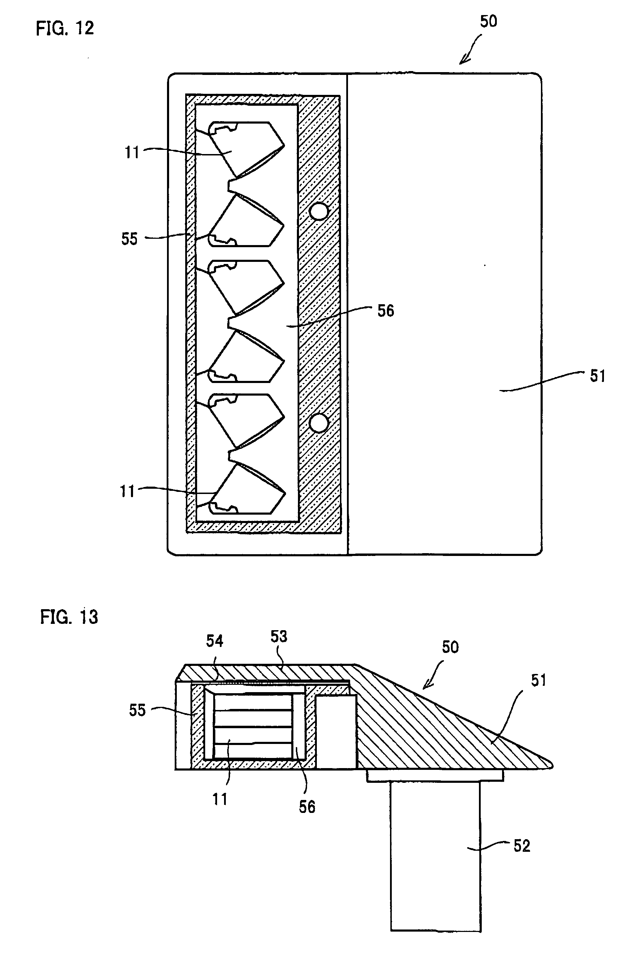

FIG. 12 is a plan view showing the inner structure of the studs and FIG 13 is a cross-sectional view of the studs shown in FIG. 12. The studs 50 comprise a casing 51 made of aluminum die cast, a leg section 52 provided on the casing 51 and adapted to be embedded in the road, eaves 53 formed by extending pan of the casing 51, and a transparent lens box 55 secured to the lower surface of the eaves 53 via a shim. Housed within the lens box 55 is a plurality of lens units (6 pieces) via a fastening member 56.

Each lens unit 11 is formed by laminating four lens bodies 1 and a front surface of adjacent lens units 11 is arranged to be alternated based on the axis line in the front and back direction. Specifically, an angle of +35° is formed between the front surface of three (3) lens units 11 among six (6) lens units 11 and the axis line in the front and back direction, while an angle of -35° is formed between the front surface of three (3) remaining lens units 11 and the axis line in the front and back direction.

In this manner, it is possible to retroreflect the incident light from a large range by changing the direction of the adjacent lens units 11.

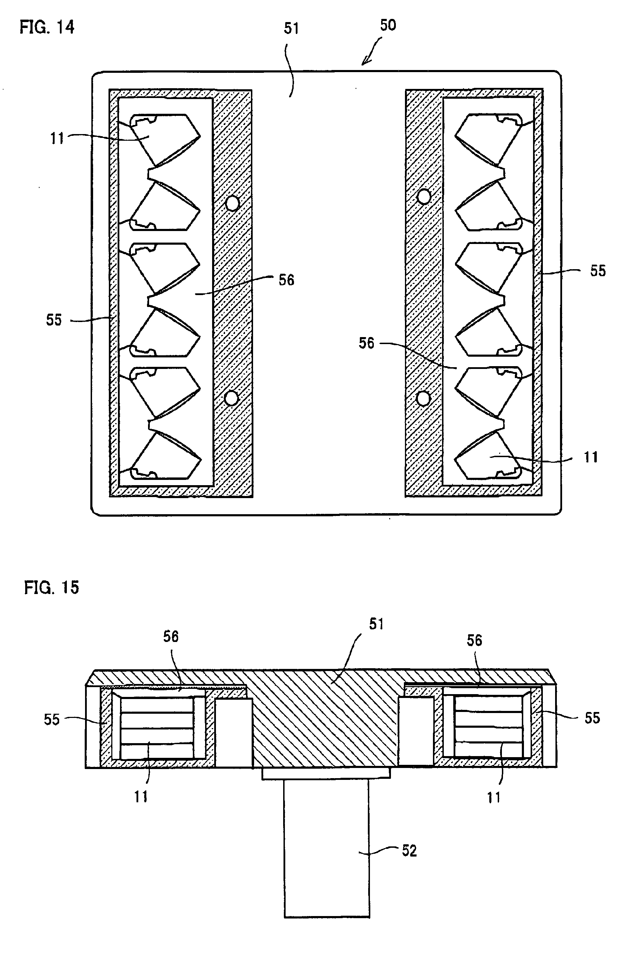

FIG. 14 is a plan view showing the inner structure of the studs according to another embodiment and FIG 15 is a cross-sectional view of the studs as shown in FIG. 14. This embodiment is for example provided on a center divider and the like, wherein the lens box 55 housing the lens units 11 is installed on both front and rear sides.

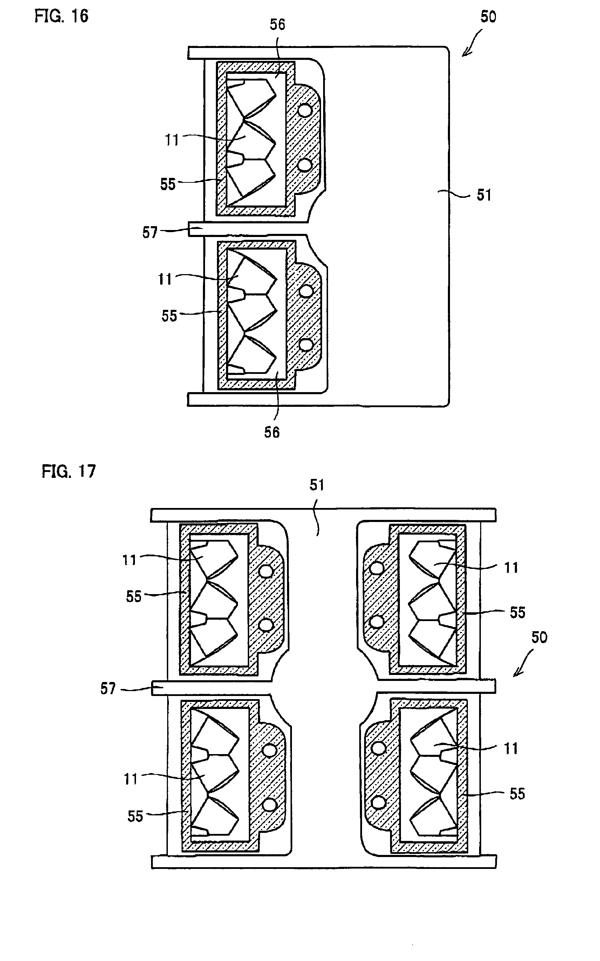

FIGS. 16 and 17 are plan views showing the ixmer structure of the studs according to another embodiment. In the embodiment of FIG. 16, the lower center section of the eaves of the casing 51 is provided with a rib 57 to divide the lower space of the eaves into two sections, wherein a lens box 55 for housing the lens units 11 is installed in each space.

The embodiment as shown in FIG. 17 is an alteration of the embodiment as shown in FIG. 16, wherein the lens box 55 for housing the lens units 11 is installed in each space in both the front and rear sections.

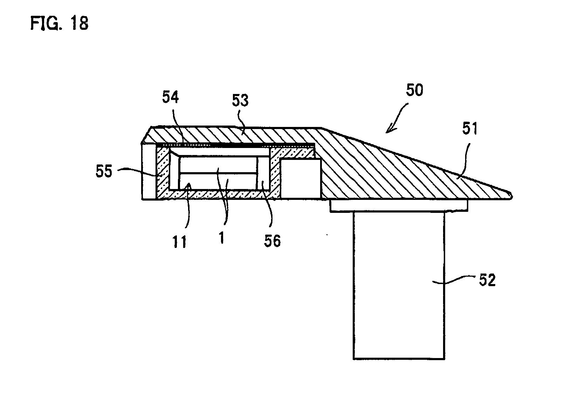

FIG. 18 is a longitudinal cross-sectional view of the studs according to another embodiment. In this embodiment, the lens unit 11 is formed by laminating two (2) lens bodies 1.

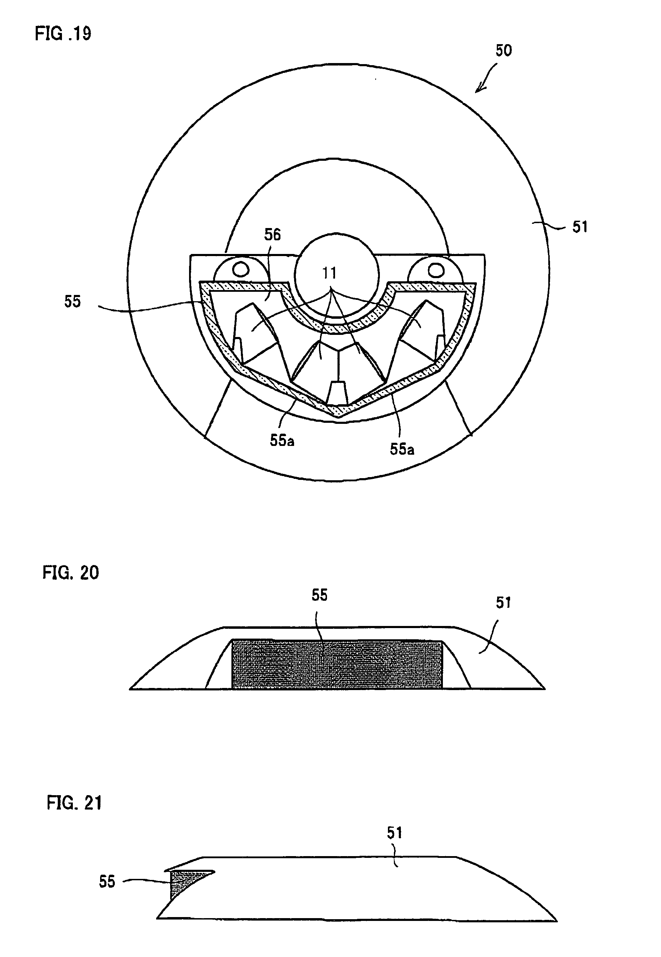

FIG. 19 is a plan view showing the inner structure of the studs according to another embodiment. FIG. 20 is a front elevation view of the studs as shown in FIG. 19 and FIG. 21 is a side view of the studs as shown in FIG 19. In this embodiment, a transparent lens box 55 housing the lens units 11 is installed in the casing 51 of a frustum of a cone shape made of aluminum die cast. The lens box 55 is formed substantially fan-shaped and a section of the front surface serving as the incident surface is made flat to reduce the influence of refractive index.

Although specific forms of embodiments of the present invention have been described above by, for example, applying the retroreflective function member (retroreflective unit) to the visual guide sign (delineator) to be mounted on the guardrail on the highway and the studs, it is to be noted that the present invention is not limited to the embodiments described above. For example, the present invention can be widely applied to the members such as signs for marine salvage which are required to be visible from a long distance.

**INDUSTRIAL APPLICABILITY**

A retroreflective function member according to the present invention can attain reflective performance (properties) of at a long distance more than 10 times (300 - 400 m) as high as a cube corner type retroreflective function member which is considered to be the most excellent in retroreflective efficiency among the conventional retroreflective function members.

In this manner, even though the retroreflective function member is installed in an extremely limited area such as a depressed section of a guardrail on the side surface, it is possible to fully exhibit the retroreflective function.

Further, studs using the retroreflective function member according to the present invention are highly visible from a long distance, and the retroreflective efficiency is high in comparison with studs in which conventional reflectors are incorporated. Since a driving source such as a solar battery is not required, this is also advantageous in cost.

**Claims**

1. A retroreflective function member made of a flat plate-shaped transparent body, **characterized in that** the front surface is an incoming and outgoing surface, the rear surface is a reflective surface, and at least one surface of both side surfaces is a reflective surface, wherein the front surface projects forward to have a cylindrical shape when seen from the side and the rear surface projects backwards to have a cylindrical shape when seen from the side.

2. The retroreflective function member according to claim 1, wherein at least one surface of the rear surface and both side surfaces is provided in a bow shape or an inverse bow shape when seen from the top.

3. The retroreflective function member according to claim1 or claim 2, wherein at least one surface of both side surfaces of the retroreflective member is a reflective surface and the rear surface projects backwards in a bow shape or concaves forward in an inverse bow shape when seen from the top, the rear surface being provided with a convex aspheric surface of which the curvature radius differs when seen from the side and the top.

4. The retroreflective function member according to claim 3, wherein the center of the curvature radius of the front surface coincides with or is situated at the rear of the center of the curvature radius of the rear surface at the center line when seen from the side.

5. The retroreflective function member according to claim 3, wherein the center of the curvature radius of the rear surface is between the central axis of the incoming surface and an extension of the reflective side surface when seen from the top.

6. The retroreflective function member according to claims 1 through 5, wherein if the curvature radius of the front surface is R1 when seen from the side and the curvature radius of the rear surface is R2 when seen from the side, $1.5 \leq R2 / R1 \leq 2.5$.

7. The retroreflective function member according to claims 1 through 5, wherein the thickness of the retroreflective function member is such that an angle ($\theta1$) between the incoming light from the horizontal direction and the line passing through the center of the curvature radius of the front surface is within 30° when seen from the side.

8. The retroreflective function member according to claim 3, wherein an angle ($\theta2$) between a line connecting an end of the rear surface in the width direction with the center of a curvature radius of the rear surface and an axis line passing through the center of a curvature radius of the rear surface is $0.01° \leq \theta2 \leq 1.0°$ when seen from the top.

9. The retroreflective function member according to claims 1 through 8, wherein the width of the rear surface when seen from the top is about half the size of the front surface.

10. The retroreflective function member according to claim 9, wherein a side surface which does not contribute to retroreflection is provided with a notch for positioning or locking.

11. A retroreflective unit **characterized in that** a plurality of retroreflective function members according to claims 1 through 10 is vertically laminated with the front and side surfaces aligned to provide a lens unit.

12. The retroreflective unit according to claim 11, wherein the retroreflective function members are selected to have different retroreflective characteristics.

13. The retroreflective unit according to claim 11, wherein the lens unit is integrally formed.

14. The retroreflective unit according to claim 11, wherein a plurality of lens units is housed in a casing.

15. The retroreflective unit according to claim 14, wherein the angle of the front surface of adjacent lens units among the lens units relative to the incoming light is caused to differ.

16. The retroreflective unit according to claim 14, wherein a case body is provided to protect a leg section embedded in a road and lens units exposed to the earth's surface.

FIG. 1

(a)

(b)

FIG. 2

FIG. 3

(a)

(b)

(c)

FIG. 4

FIG. 5

(a)

(b)

(c)

FIG. 6

(a)

32
31
1
Light with incident angle of 0 degree
35°

(b)

Light with incident angle of 20 degrees
1
1
Light with incident angle of 0 degree
31
15°
32

(c)

1
1
1
31

EP 1 580 580 A1

FIG. 7

FIG. 8

20

FIG. 9

FIG. 10

FIG. 11

FIG. 12

50

11

55

56

51

11

FIG. 13

54  53

50

51

55

11  56

52

FIG. 14

FIG. 15

FIG. 16

FIG. 17

FIG. 18

FIG .19

FIG. 20

FIG. 21

FIG. 22

Resin

Reflective surface

FIG. 23

FIG. 24

(a)

(b)

(c)

## INTERNATIONAL SEARCH REPORT

| International application No. |
| --- |
| PCT/JP03/16361 |

A. CLASSIFICATION OF SUBJECT MATTER
    Int.Cl⁷  G02B5/126, E01F9/06, G09F13/16

According to International Patent Classification (IPC) or to both national classification and IPC

B. FIELDS SEARCHED

Minimum documentation searched (classification system followed by classification symbols)
    Int.Cl⁷  G02B5/126, G01F9/06, G09F13/16

Documentation searched other than minimum documentation to the extent that such documents are included in the fields searched
    Jitsuyo Shinan Koho          1922-1996   Toroku Jitsuyo Shinan Koho   1994-2004
    Kokai Jitsuyo Shinan Koho    1971-2004   Jitsuyo Shinan Toroku Koho   1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | US 4930870 A   (ItW New Zealand Ltd.),<br>05 June, 1990 (05.06.90),<br>Full text<br>& JP 61-63901 A | 1-5,11,13,14<br>6-10,12,15,<br>16 |
| Y | JP 8-220315 A   (Japan Invention Spread Promotion Association Corp.),<br>30 August, 1996 (30.08.96),<br>Full text<br>(Family: none) | 9,10 |
| Y | JP 2-235001 A   (Rainfaruto Kogyo Kabushiki Kaisha),<br>18 September, 1990 (18.09.90),<br>Full text<br>(Family: none) | 16 |

☐ Further documents are listed in the continuation of Box C.      ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>    08 April, 2004 (08.04.04) | Date of mailing of the international search report<br>    27 April, 2004 (27.04.04) |
| Name and mailing address of the ISA/<br>    Japanese Patent Office | Authorized officer |
| Facsimile No. | Telephone No. |

Form PCT/ISA/210 (second sheet) (July 1998)

EP 1 580 580 A1

## INTERNATIONAL SEARCH REPORT

International application No.

PCT/JP03/16361

C (Continuation). DOCUMENTS CONSIDERED TO BE RELEVANT

| Category* | Citation of document, with indication, where appropriate, of the relevant passages | Relevant to claim No. |
|---|---|---|
| A | JP 34-3443 Y1 (Masahide SUZUKI),<br>10 March, 1959 (10.03.59),<br>Full text<br>(Family: none) | 1-16 |
| A | JP 61-81601 U (Kubota Tekko Kabushiki Kaisha),<br>30 May, 1986 (30.05.86),<br>Full text<br>(Family: none) | 1-16 |

Form PCT/ISA/210 (continuation of second sheet) (July 1998)

31